# EUROPEAN PATENT APPLICATION

(11) **EP 2 509 180 A1**
(43) Date of publication of application: **10.10.2012**
(21) Application number: 10833340.2
(22) Date of filing: 26.11.2010
(51) Int. Cl.: H02J 3/00, H01M 10/44, H02J 3/32

(54) **CONTROL APPARATUS AND CONTROL METHOD**

(30) Priority: 30.11.2009 JP 2009272985
(71) Applicant: Kyocera Corporation, Kyoto-shi Kyoto 612-8501 (JP)
(72) Inventor: KIUCHI, Kazuya, Tokyo 158-8610 (JP); KUSAFUKA, Kaoru, Tokyo 158-8610 (JP); WATANABE, Tadayuki, Tokyo 158-8610 (JP); SHICHIRI, Kazumasa, Tokyo 158-8610 (JP); IWABUCHI, Akinori, Yokohama-shi Kanagawa 224-8502 (JP)
(74) Representative: Schwabe - Sandmair - Marx
(86) International application number: PCT/JP2010/071150
(87) International publication number: WO 2011/065495

(57) **Abstract**

A smart controller (102) receives, from an EMS (70), control information in the form of rate information indicating electricity prices determined in accordance both with supply of electricity from a power system (60) and with demand of electricity from a group of users. Additionally, on the basis of comparison of the electricity prices with rate threshold values found in a predetermined correspondence relationship between operation mode and rate threshold value, the smart controller (102) determines an operation mode for a rechargeable battery (108) in such a manner that, as the operation mode, an operation mode in which to discharge electricity is set when the electricity prices is high, and an operation mode in which to charge electricity is set when the electricity prices is low. Furthermore, the smart controller (102) controls the rechargeable battery (108) so that electricity may be charged or discharged in accordance with the thus determined operation mode.

## Description

### TECHNICAL FIELD

The present invention relates to a control device provided in a power consumer including a DC power supply, a load, and a battery capable of storing power from the DC power supply, and controlling the battery and a heat storage, and a control method in the control device.

### BACKGROUND ART

In recent years, in view of the reduction of an environment load, there has been provided a system in which a DC power supply such as a photovoltaic cell is provided in a house and the like which are power consumers, electric power required by devices in the house is supplied by power generated by the DC power supply, a battery in the house is charged by surplus power (for example, refer to Patent Document 1), and the battery is appropriately discharged to feed back power to an electric power system, resulting in gradual availability of a system for selling it (electric power selling).

### PRIOR ART DOCUMENT

### PATENT DOCUMENT

Patent Document 1: Japanese Patent Application Laid-open No. 2007-288932

### SUMMARY OF THE INVENTION

However, the above-mentioned conventional technology does not consider an electric power demand of a consumer group and an electric power supply from an electric power system. This led to a problem even that when the electric power supply from the electric power system exceeds the electric power demand of the consumer group, power is fed back from a battery in a consumer to the electric power system.

Therefore, the present invention has been achieved in view of the above-described problems, and an object thereof is to provide a control device and a control method, by which to enable appropriate battery control in consideration of the supply and demand of electric power.

To solve the above problem, the present invention has following features. A first feature of the present invention is summarized as a control device (smart controller 102) provided in a power consumer (smart house 10) having a DC power supply (photovoltaic cell 106), a load (illumination 110, air conditioner 112), and a battery (battery 108) capable of storing power from the DC power supply, and controlling the battery, the control device comprising: a reception unit (reception processing unit 162) configured to receive charge information indicating an electricity prices set according to supply and demand of electric power; and a battery control unit (battery control unit 164) configured to control charge and discharge of the battery of the consumer based on the charge information received in the reception unit.

In consideration of the fact that the electricity prices is set according to the supply and demand of electric power, the control device as described above controls the charge and discharge of the battery provided in the consumer, based on the charge information indicating the electricity prices. This enables the appropriate battery control in consideration of the supply and demand of electric power.

A second feature of the present invention is summarized as that the battery control unit controls the battery to be charged by power from an electric power system, when the electricity prices indicated by the charge information is lower than a first reference value.

A third feature of the present invention is summarized as the control device comprising: a heat storage (heat storage device 114) that converts power into heat, wherein the battery control unit controls power from an electric power system to be supplied to the heat storage, when the electricity prices indicated by the charge information is lower than a second reference value,.

A fourth feature of the present invention is summarized as that the battery control unit controls the battery to be discharged, when the electricity prices indicated by the charge information is higher than a third reference value.

A fifth feature of the present invention is summarized as that the battery control unit controls power to be fed back from the battery to an electric power system, when the electricity prices indicated by the charge information is higher than a fourth reference value.

A sixth feature of the present invention is summarized as that an operation mode related to the battery is associated with a threshold value of the electricity prices, and the battery control unit selects the operation mode based on the electricity prices indicated by the charge information, and the threshold value of the electricity prices.

A seventh feature of the present invention is summarized as that the battery control unit stops controlling discharge of the battery, when the selected operation mode is an operation mode in which the battery is discharged and in a case of satisfying at least one of a condition that a remaining power amount of the battery is equal to or less than a predetermined value, prediction that a power generation amount of the DC power supply is reduced, and prediction that power consumption of the load is increased,.

An eighth feature of the present invention is summarized as that the charge information indicates at least one of a predetermined electricity prices and a current electricity prices.

A ninth feature of the present invention is summarized as that the reception unit receives the charge information indicating the predetermined electricity prices in a first cycle, and receives the charge information indicating the current electricity prices in a second cycle shorter than the first cycle.

A tenth feature of the present invention is summarized as that an operation mode related to the battery is associated with a threshold value of the electricity prices, and the battery control unit selects the operation mode based on the current electricity prices and the threshold value of the electricity prices, while the charge information indicating the current electricity prices is received in the reception unit in the second cycle,.

An eleventh feature of the present invention is summarized as a control method in a control device provided used in a power consumer having a DC power supply, loads, and a battery capable of storing power from the DC power supply, and controlling the battery, the control method comprising: a step of receiving, by the control device, charge information indicating an electricity prices set according to supply and demand of electric power; and a step of controlling, by the control device, charge and discharge of the battery of the consumer based on the received charge information.

According to the present invention, it is possible to perform appropriate battery control in consideration of the supply and demand of electric power.

### BRIEF DESCRIPTION OF THE DRAWINGS

[Fig. 1] Fig. 1 is a configuration diagram of an electric power system according to an embodiment of the present invention.
[Fig. 2] Fig. 2 is a configuration diagram of a smart controller according to the embodiment of the present invention.
[Fig. 3] Fig. 3 is a diagram illustrating a correspondence relation between operation modes and charge threshold values according to the embodiment of the present invention.
[Fig. 4] Fig. 4 is a diagram illustrating time transition of an electricity prices according to the embodiment of the present invention.
[Fig. 5] Fig. 5 is a flowchart illustrating an operation of a smart controller according to the embodiment of the present invention.

### MODES FOR CARRYING OUT THE INVENTION

Hereinafter, an embodiment of the present invention will be described with reference to the accompanying drawings. Specifically, the embodiment of the present invention will be described in sequence of (1) Configuration of electric power system, (2) Operation of smart controller, (3) Operation and effect, and (4) Other embodiments. In all drawings for explaining the following embodiments, the same or similar reference numerals are used to designate the same or similar elements.

### (1) Configuration of electric power system

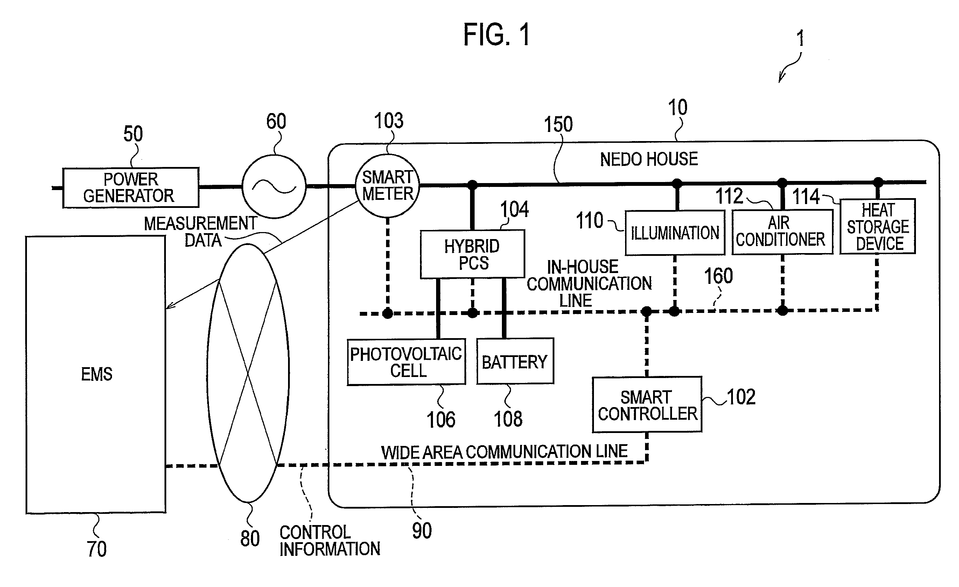

Fig. 1 is a configuration diagram of an electric power system 1 according to the embodiment of the present invention. The electric power system 1 illustrated in Fig. 1 is a system employing so-called a smart grid.

As illustrated in Fig. 1, the electric power system 1 includes a smart house 10 serving as a power consumer, a power generator 50 serving as a power supplier, an energy management system (EMS) 70 for controlling the whole power of the electric power system 1, an electric power system 60 between the smart house 10 and the power generator 50, and the Internet 80 serving as a communication path between the smart house 10 and the EMS 70. In addition, under the control of the electric power system 60, a plurality of smart houses 10 exist in plural, and these smart houses 10 form a power consumer group.

In the electric power system 1, power is transmitted to the smart house 10 from the power generator 50 via the electric power system 60 and is used in the smart house 10. Furthermore, in some cases, power is fed back from the smart house 10 to the electric power system 60.

Furthermore, in the electric power system 1, an amount of power to be used in the smart house 10 is measured and is transmitted to the EMS 70 via the Internet 80 as measurement data.

The EMS 70 decides an electricity prices based on the electric power supply from the electric power system 60 and an electric power demand of the consumer group based on the measurement data. Here, as a value (supply-demand gap) obtained by subtracting the amount of power to be used in the consumer group from the amount of power that can be supplied from the electric power system 60 to the consumer group is larger, the EMS 70 reduces an electricity prices. As the supply-demand gap is small, the EMS 70 increases the electricity prices. Specifically, it is possible for the EMS 70 to decide two types of electricity prices, that is, TOU (Time of Use) which is an electricity prices determined according to time zones based on a past supply-demand gap, and RTP (Real Time Pricing) which is an electricity prices set based on a real-time supply-demand gap.

Moreover, the EMS 70 transmits control information including charge information indicating the decided electricity prices to the smart house 10 via the Internet 80. Specifically, the EMS 70, for example, in a 24-hour cycle, transmits the TOU a predetermined period before (for example, a day before) a time zone to which the TOU is applied. The EMS 70 transmits the RTP in a cycle (for example, a 10-minute cycle) shorter than the transmission cycle of the TOU.

The smart house 10 includes a smart controller 102 serving as a control device, a smart meter 103, a hybrid power conditioner (a hybrid PCS) 104, a photovoltaic cell 106 serving as a DC power supply, a battery 108, a remote control sensor unit 109, an illumination 110 and an air conditioner 112 serving as a load, and a heat storage device 114 serving as a heat storage.

The smart controller 102 is connected to the Internet 80 via a wired line or a wide area communication line 90 serving as a radio line. Furthermore, the smart controller 102 is connected to the smart meter 103, the hybrid PCS 104, and the remote control sensor unit 109 via a wired line or an in-house communication line 160 serving as a radio line. The configuration and operation of the smart controller 102 will be described later.

The smart meter 103 is connected to the electric power system 60, and is connected to an in-house distribution line 150. The smart meter 103 detects the amount of power supplied from the electric power system 60 and used for the operation of the illumination 110, the air conditioner 112, and the heat storage device 114 or used for charging the battery 108, and transmits the detected power amount to the EMS 70 via the Internet 80 as measurement data.

The hybrid PCS 104 is connected to the in-house distribution line 150, and is connected to the photovoltaic cell 106 and the battery 108. The hybrid PCS 104 sends DC power generated by the photovoltaic cell 106 to the in-house distribution line 150 or stores the DC power in the battery 108, under the control by the smart controller 102. Furthermore, the hybrid PCS 104 converts DC power due to the discharge of the battery 108 to AC power and sends the AC power to the in-house distribution line 150, under the control by the smart controller 102. The AC power sent to the in-house distribution line 150 is appropriately used in the illumination 110, the air conditioner 112, and the heat storage device 114, or is fed back to the electric power system 60. Furthermore, the hybrid PCS 104 converts AC power from the electric power system 60 to DC power and stores the DC power in the battery 108, under the control by the smart controller 102.

The illumination 110, the air conditioner 112, and the heat storage device 114 are connected to the in-house distribution line 150, and are connected to the in-house communication line 160. The illumination 110, the air conditioner 112, and the heat storage device 114 operate by AC power from the in-house distribution line 150, under the control by the smart controller 102. The heat storage device 114, for example, is a heat pump.

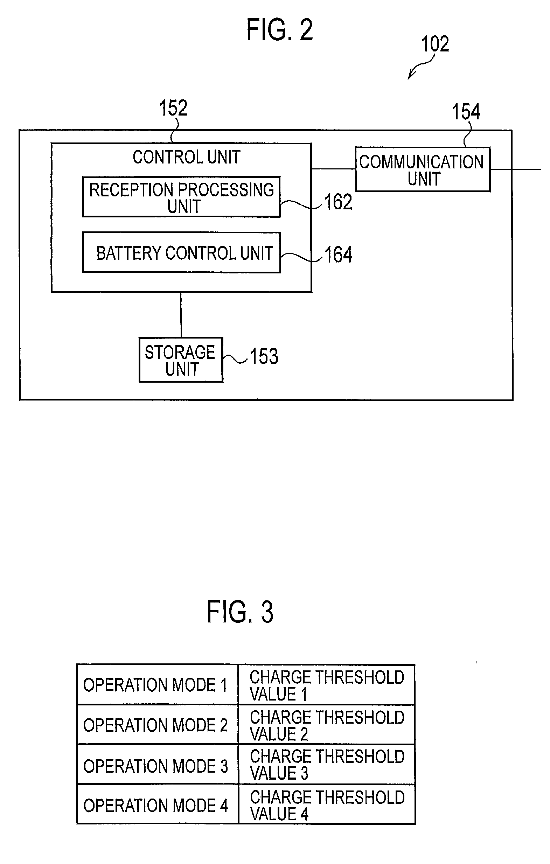

Fig. 2 is a configuration diagram of the smart controller 102. As illustrated in Fig. 2, the smart controller 102 includes a control unit 152, a storage unit 153, and a communication unit 154.

The control unit 152, for example, is a CPU, and controls each element of the smart house 10. The storage unit 153 is configured by using a memory, for example, and stores various types of information used for the control and the like of each element of the smart house 10. The communication unit 154 receives control information from the EMS 70 via the wide area communication line 90 and the Internet 80. Furthermore, the communication unit 154 communicates with the smart meter 103, the hybrid PCS 104, and the remote control sensor unit 109 via the in-house communication line 160.

The control unit 152 includes a reception processing unit 162 and a battery control unit 164. The reception processing unit 162 receives the control information received in the communication unit 154. Furthermore, the reception processing unit 162 extracts charge information included in the control information.

The battery control unit 164 compares electricity prices indicated by the extracted charge information with a threshold value (a charge threshold value) of a predetermined electricity prices, thereby deciding the operation mode of the battery 108. Here, the operation modes are associated with the charge and discharge of the battery 108.
That is, the battery 108 performs charge or discharge according to a set operation mode.

As described above, there exit the two types of electricity prices (the TOU and the RTP) indicated by the charge information, and the RTP has a transmission cycle shorter than that of the TOU and corresponds to a real-time supply-demand situation. Therefore, while the RTP is acquired in a predetermined transmission cycle, the battery control unit 164 compares the RTP with the charge threshold value to decide the operation mode. While it is not possible to acquire the RTP in a predetermined transmission cycle due to communication failure, the battery control unit 164 compares the RTP with the charge threshold value to decide the operation mode.

Fig. 3 is a diagram illustrating a correspondence relation between operation modes and charge threshold values. According to the correspondence relation between operation modes and charge threshold values, a charge threshold value corresponding to a charge operation mode is low and a charge threshold value corresponding to a discharge operation mode is high. In Fig. 3, as the charge threshold value has a higher number, the charge threshold value is higher. Furthermore, in Fig. 3, the operation mode 1 and the operation mode 2 are operation modes in which the battery 108 is charged, and the operation mode 3 and the operation mode 4 are operation modes in which the battery 108 is discharged.

More specifically, in the operation mode 1, the battery 108 is charged and heat is stored in the heat storage device 114 by power from the electric power system 60. In the operation mode 2, the battery 108 is charged by the power from the electric power system 60. In the operation mode 3, the battery 108 is discharged and power is supplied to the illumination 110 and the air conditioner 112, which serve as a load. In the operation mode 4, the battery 108 is discharged and power is supplied to the illumination 110 and the air conditioner 112, which serve as a load, and the electric power system 60.

The correspondence relation between the operation modes and the charge threshold values is predetermined and is stored in the storage unit 153.

The battery control unit 164 reads out the correspondence relation between the operation modes and the charge threshold values from the storage unit 153. Next, among the charge threshold values, the battery control unit 164 specifies a charge threshold value which is higher than the electricity prices indicated by the extracted charge information and is the nearest the electricity prices indicated by the extracted charge information.

For example, when the electricity prices indicated by the extracted charge information exists between the charge threshold value 2 and the charge threshold value 3 illustrated in Fig. 3, the battery control unit 164 specifies the charge threshold value 3. Moreover, the battery control unit 164 specifies an operation mode corresponding to the specified charge threshold value. For example, when the charge threshold value 3 has been specified in Fig. 3, the operation mode 3 corresponding to the charge threshold value 3 is also specified.

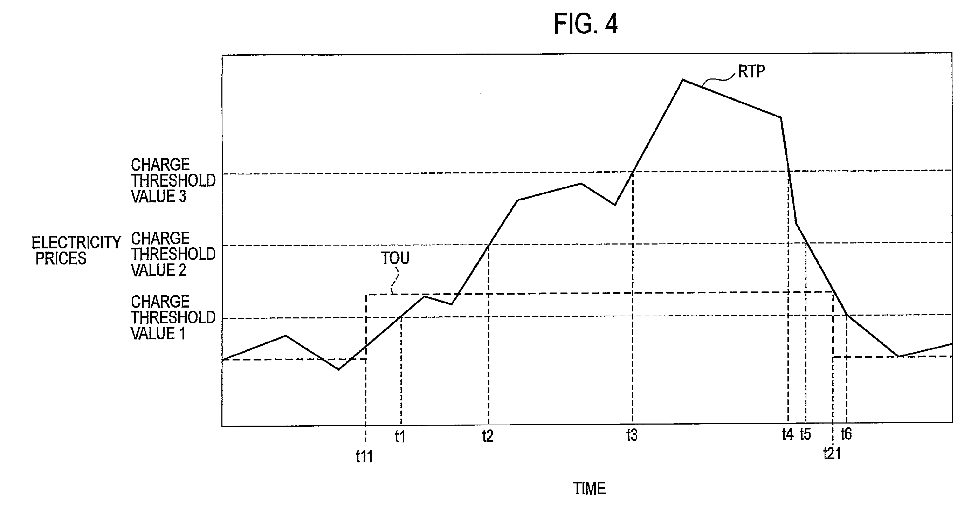

Hereinafter, the process of the battery control unit 164 will be described using the case, in which the correspondence relation between the operation modes and the charge threshold values is illustrated in Fig. 3 and time transition of electricity prices is illustrated in Fig. 4, as an example.

While the RTP is acquired in a predetermined cycle, since, initially, the RTP is smaller than the charge threshold value 1, the battery control unit 164 decides an operation mode of the battery 108 as the operation mode 1. If the RTP is equal to or more than the charge threshold value 1 at time t1, the battery control unit 164 switches the operation mode of the battery 108 from the operation mode 1 to the operation mode 2. If the RTP is equal to or more than the charge threshold value 2 at time t2, the battery control unit 164 switches the operation mode of the battery 108 from the operation mode 2 to the operation mode 3. If the RTP is equal to or more than the charge threshold value 3 at time t3, the battery control unit 164 switches the operation mode of the battery 108 from the operation mode 3 to the operation mode 4.

Then, the RTP is smaller than the charge threshold value 3 at time t4, the battery control unit 164 switches the operation mode of the battery 108 from the operation mode 4 to the operation mode 3. If the RTP is smaller than the charge threshold value 2 at time t5, the battery control unit 164 switches the operation mode of the battery 108 from the operation mode 3 to the operation mode 2. If the RTP is smaller than the charge threshold value 1 at time t6, the battery control unit 164 switches the operation mode of the battery 108 from the operation mode 2 to the operation mode 1.

Meanwhile, when the RTP is not acquired in a predetermined cycle and the TOU is acquired, since, initially, the TOU is smaller than the charge threshold value 1, the battery control unit 164 decides the operation mode of the battery 108 as the operation mode 1. If the TOU is equal to or more than the charge threshold value 1 at time t11, the battery control unit 164 switches the operation mode of the battery 108 from the operation mode 1 to the operation mode 2. Then, if the TOU is smaller than the charge threshold value 1 at time t21, the battery control unit 164 switches the operation mode of the battery 108 from the operation mode 2 to the operation mode 1.

In this way, the operation mode of the battery 108 is decided. When the decided operation mode is an operation mode (for example, the operation mode 1 and the operation mode 2 in Fig. 3) in which the battery 108 is charged, the battery control unit 164 performs the following process.

That is, when the decided operation mode is the operation mode 1, the battery control unit 164 controls the hybrid PCS 104, so that the battery 108 is charged by the power from the electric power system 60. Moreover, the battery control unit 116 controls the heat storage device 114, so that heat is stored in the heat storage device 114 by the power from the electric power system 60. Furthermore, when the decided operation mode is the operation mode 1, the battery control unit 164 controls the hybrid PCS 104, so that the battery 108 is charged by the power from the electric power system 60.

Meanwhile, when the decided operation mode is an operation mode (for example, the operation mode 3 and the operation mode 4 in Fig. 3) in which the battery 108 is discharged, the battery control unit 164 performs the following process.

That is, the battery control unit 164 requests the hybrid PCS 104 for a remaining power amount in the battery 108 via the communication unit 154. Upon request of the battery control unit 164, the hybrid PCS 104 detects the remaining power amount in the battery 108 and outputs the remaining power amount to the smart controller 102. The battery control unit 164 receives the remaining power amount via the communication unit 154.

Furthermore, the battery control unit 164 acquires prediction information on a future power generation amount of the photovoltaic cell 106. For example, when there is a nighttime zone in the period from the present time until after a predetermined time period, the battery control unit 164 acquires prediction information indicating that the power generation amount of the photovoltaic cell 106 is reduced in the period from the present time until after a predetermined time period. Furthermore, the battery control unit 164 receives weather forecast information from an external site via the communication unit 154, the wide area communication line 90, and the Internet 80. Moreover, when it is forecast to rain or to be cloudy in the period from the present time until after a predetermined time period, the battery control unit 164 acquires prediction information indicating that the power generation amount of the photovoltaic cell 106 is reduced in the period from the present time until after a predetermined time, based on the weather forecast information.

Furthermore, the battery control unit 164 acquires a prediction value of future power consumption of the illumination 110 and the air conditioner 112, which serve as a load. For example, it is assumed that a statistical value every time zone of a single day in the past is stored in the storage unit 153, wherein the statistical value is a value of the power consumption of the illumination 110 and the air conditioner 112, which serve as a load. Then, the battery control unit 164 reads out the statistical value from the storage unit 153. Moreover, the battery control unit 164 acquires a prediction value of power consumption of the illumination 110 and the air conditioner 112, which serve as a load in the period from the present time until after a predetermined time, based on the read-out statistical value.

Next, in the case of satisfying at least one of a first condition in which the remaining power amount of the battery 108 is equal to or less than a predetermined value, a second condition in which it is predicted that the power generation amount of the photovoltaic cell 106 is reduced in the period from the present time until after a predetermined time, and a third condition in which it is predicted that the power consumption of the illumination 110 and the air conditioner 112, which serve as a load is increased in the period from the present time until after a predetermined time, the battery control unit 164 prevents the battery 108 from being discharged.

Meanwhile, when any one of the above-mentioned first to third conditions is not satisfied, the battery control unit 164 controls the battery 108 to be discharged according to the operation mode in which the battery 108 is discharged. That is, when a decided operation mode is the operation mode 3 of Fig. 3, the battery control unit 164 discharges the battery 108 and supplies power to the illumination 110 and the air conditioner 112, which serve as a load. Furthermore, when the decided operation mode is the operation mode 4 of Fig. 3, the battery control unit 164 discharges the battery 108 and supplies power to the illumination 110 and the air conditioner 112, which serve as a load, and the electric power system 60.

### (2) Operation of the smart controller

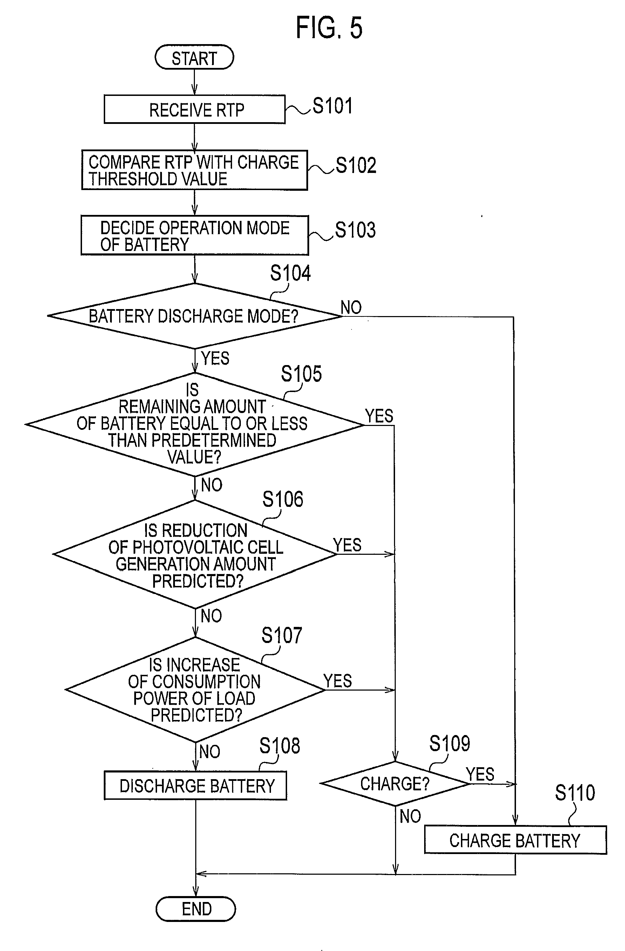

Next, the operation of the smart controller 102 will be described. Fig. 5 is a sequence diagram illustrating the operation of the smart controller 102.

In step S101, the smart controller 102 receives the control information including the RTP from the EMS 70.

In step S102, the smart controller 102 compares the RTP with a charge threshold value in the predetermined correspondence relation between operation modes and charge threshold values.

In step S103, the smart controller 102 decides an operation mode of the battery 108 based on a comparison result.

In step S104, the smart controller 102 determines whether the decided operation mode is an operation mode (a battery discharge mode) in which the battery 108 is discharged.

When the decided operation mode is the battery discharge mode, the smart controller 102 determines whether the remaining power amount of the battery 108 is equal to or less than a predetermined value in step S105.

When the remaining power amount of the battery 108 exceeds the predetermined value, the smart controller 102 determines whether it is predicted that the power generation amount of the photovoltaic cell 106 is reduced in step S106.

When it is not predicted that the power generation amount of the photovoltaic cell 106 is reduced, the smart controller 102 determines whether it is predicted that power consumption of the load is increased in step S107.

When it is not predicted that the power consumption of the load is increased, the smart controller 102 discharges the battery 108 according to the battery discharge mode in step S108. Meanwhile, when it is determined that the remaining power amount of the battery 108 is equal to or less than the predetermined value in step S105, when it is determined that the power generation amount of the photovoltaic cell 106 is predicted to be reduced in step S106, and when it is determined that the power consumption of the load is predicted to be increased in step S107, the smart controller 102 does not discharge the battery 108 regardless of the battery discharge mode. In this case, in step S108, the smart controller 102 determines whether to charge the battery 108. For example, when it is determined to charge the battery 108, for example, when the charge of the battery 108 is selected by an operation instruction and the like of a user, the smart controller 102 charges the battery 108 in step S110. Meanwhile, when it is determined that the battery 108 is not charged, a series of operations are completed.

Furthermore, when it is determined that the decided operation mode is not the battery discharge mode in step S104, in other words, when the decided operation mode is a mode (a battery charge mode) in which the battery 108 is charged, the smart controller 102 charges the battery 108 according to the battery charge mode in step S110.

### (3) Operation and effect

In the electric power system 1 according to the embodiment of the present invention, the photovoltaic cell 106, the battery 108, the illumination 110, the air conditioner 112, and the heat storage device 114, which serve as a load are provided in the smart house 10 which is a power consumer, and the smart controller 102 in the smart house 10 controls the charge and discharge of the battery 108. Specifically, the smart controller 102 receives control information from the EMS 70 as charge information indicating the electricity prices set according to the electric power supply from the electric power system 60 and the electric power demand of a consumer group. Moreover, the smart controller 102 compares the electricity prices with the charge threshold value in the predetermined correspondence relation between the operation modes and the charge threshold values, thereby making a decision so that the operation mode of the battery 108 is an operation mode in which the battery 108 is discharged when the electricity prices is high and is an operation mode in which the battery 108 is charged when the electricity prices is low. Moreover, the smart controller 102 controls the battery 108 such that the charge and the discharge are performed in the decided operation modes.

As described above, in consideration of the fact that the electricity prices is set according to the electric power supply from the electric power system 60 and the electric power demand of the consumer group, the smart controller 102 makes a decision so that the operation mode of the battery 108 is the operation mode in which the battery 108 is discharged when the electricity prices is high and is the operation mode in which the batter 108 is charged when the electricity prices is low, so that it is possible to perform appropriate battery control in consideration of the supply and demand of electric power.

### (4) Other embodiments

As described above, the present invention has been described with the embodiments. However, it should not be understood that those descriptions and drawings constituting a part of the present disclosure limit the present invention. From this disclosure, a variety of alternate embodiments, examples, and applicable techniques will become apparent to one skilled in the art.

In the above-mentioned embodiment, the photovoltaic cell 106 is used as a DC power supply. However, even in the case of using other DC power supplies, the invention can be applied in the same manner.

Furthermore, in the above-mentioned embodiments, the description was applied to a single consumer as the smart house 10. However, the present invention can also be applied to a plurality of consumers, including one or more consumers with a battery, divided by a predetermined area and the like.

Furthermore, the function of the smart controller 102 according to the above-mentioned embodiment can also be embedded in another device such as the smart meter 103. Furthermore, the function of the smart controller 102 may also be provided in the EMS 70, and can be applied to various systems using smart grid technology such as HEMS (Home Energy Management System) or BEMS (Building and Energy Management System).

Thus, it must be understood that the present invention includes various embodiments that are not described herein. Therefore, the present invention is limited only by the specific features of the invention in the scope of the claims reasonably evident from the disclosure above.

The entire contents of Japanese Patent Application No. 2009-272985 (filed on November 30, 2009) are incorporated in the present specification by reference.

### INDUSTRIAL APPLICABILITY

The control device, the control system, and the control method of the present invention can perform appropriate battery control in consideration of the supply and demand of electric power, and are available as a control device and the like.

## Claims

1. A control device provided in a power consumer having a DC power supply, a load, and a battery capable of storing power from the DC power supply, and controlling the battery, the control device comprising:
a reception unit configured to receive charge information indicating electricity prices set according to supply and demand of electric power; and
a battery control unit configured to control charge and discharge of the battery of the consumer based on the charge information received in the reception unit.

2. The control device according to claim 1, wherein the battery control unit controls the battery to be charged by power from an electric power system, when the electricity prices indicated by the charge information is lower than a first reference value.

3. The control device according to claim 1, the control device comprising: a heat storage that converts power into heat, wherein
the battery control unit controls power from an electric power system to be supplied to the heat storage, when the electricity prices indicated by the charge information is lower than a second reference value,.

4. The control device according to claim 1, wherein the battery control unit controls the battery to be discharged, when the electricity prices indicated by the charge information is higher than a third reference value.

5. The control device according to claim 1, wherein the battery control unit controls power to be fed back from the battery to an electric power system, when the electricity prices indicated by the charge information is higher than a fourth reference value.

6. The control device according to claim 1, wherein
an operation mode related to the battery is associated with a threshold value of the electricity prices, and
the battery control unit selects the operation mode based on the electricity prices indicated by the charge information, and the threshold value of the electricity prices.

7. The control device according to claim 6, wherein the battery control unit stops controlling discharge of the battery, when the selected operation mode is an operation mode in which the battery is discharged and in a case of satisfying at least one of a condition that a remaining power amount of the battery is equal to or less than a predetermined value, prediction that a power generation amount of the DC power supply is reduced, and prediction that power consumption of the load is increased,.

8. The control device according to claim 1, wherein the charge information indicates at least one of a predetermined electricity prices and a current electricity prices.

9. The control device according to claim 8, wherein the reception unit receives the charge information indicating the predetermined electricity prices in a first cycle, and receives the charge information indicating the current electricity prices in a second cycle shorter than the first cycle.

10. The control device according to claim 9, wherein
an operation mode related to the battery is associated with a threshold value of the electricity prices, and
the battery control unit selects the operation mode based on the current electricity prices and the threshold value of the electricity prices, while the charge information indicating the current electricity prices is received in the reception unit in the second cycle,.

11. A control method in a control device provided used in a power consumer having a DC power supply, loads, and a battery capable of storing power from the DC power supply, and controlling the battery, the control method comprising:
a step of receiving, by the control device, charge information indicating electricity prices set according to supply and demand of electric power; and
a step of controlling, by the control device, charge and discharge of the battery of the consumer based on the received charge information.
